# FASCICULE DE BREVET EUROPEEN

(11) **EP 0 611 190 B1**
(45) Date de publication et mention de la délivrance du brevet: **11.12.1996**
(21) Numéro de dépôt: 94400233.6
(22) Date de dépôt: 04.02.1994
(51) Int. Cl.: B60T 7/10

(54) **Levier de frein à main perfectionné**
Handbremshebel
Hand brake lever

(30) Priorité: 09.02.1993 FR 9301394
(43) Date de publication de la demande: 17.08.1994
(73) Titulaire: Société Anonyme dite: REGIE NATIONALE DES USINES RENAULT, 92109 Boulogne Billancourt (FR)
(72) Inventeur: Heron, Jacky, F-78800 Houilles (FR); Ponceau, Philippe, F-78610 Le Perray en Yvelines (FR)

(56) Documents cités:
- EP-A- 0 212 664
- DE-C- 2 804 604
- FR-A- 2 504 475
- GB-A- 2 079 903

## Description

La présente invention est relative à un levier de frein à main perfectionné monté à articulation autour d'un axe porté par un support fixe dont une partie au moins porte un élément de recouvrement .

Les leviers de frein à main sont généralement munis d'un soufflet d'étanchéité ou d'un manchon de recouvrement faisant office de soufflet tel que décrit dans la publication FR-A-2504475, ou d'une gaine rigide solidaire du levier et articulé sur un support fixe tel que représenté dans la publication EP-A-0212664.

La présente invention vise à réduire de façon significative la propagation des ondes acoustiques par le frein à main lors de l'utilisation du véhicule.

Pour parvenir à ce but, selon l'invention, l'élément de recouvrement porte une surface d'étanchéité d'appui sur le support du levier dans le but d'éviter la propagation des ondes acoustiques dans l'habitacle d'un véhicule automobile en position desserrée du frein.

Selon un mode de réalisation préféré du levier, la surface d'étanchéité est de configuration rectangulaire et entoure une fente de montage du levier au travers de son support phoniquement isolé.

La compréhension de la présente invention sera facilitée par la description d'une forme préférée d'exécution d'un tel levier de frein à main, en référence aux dessins annexés dans lesquels :
- La figure 1 est une vue en perspective,du frein à main en position serrée.
- La figure 2 est une vue en coupe longitudinale du frein à main représenté a la figure1.

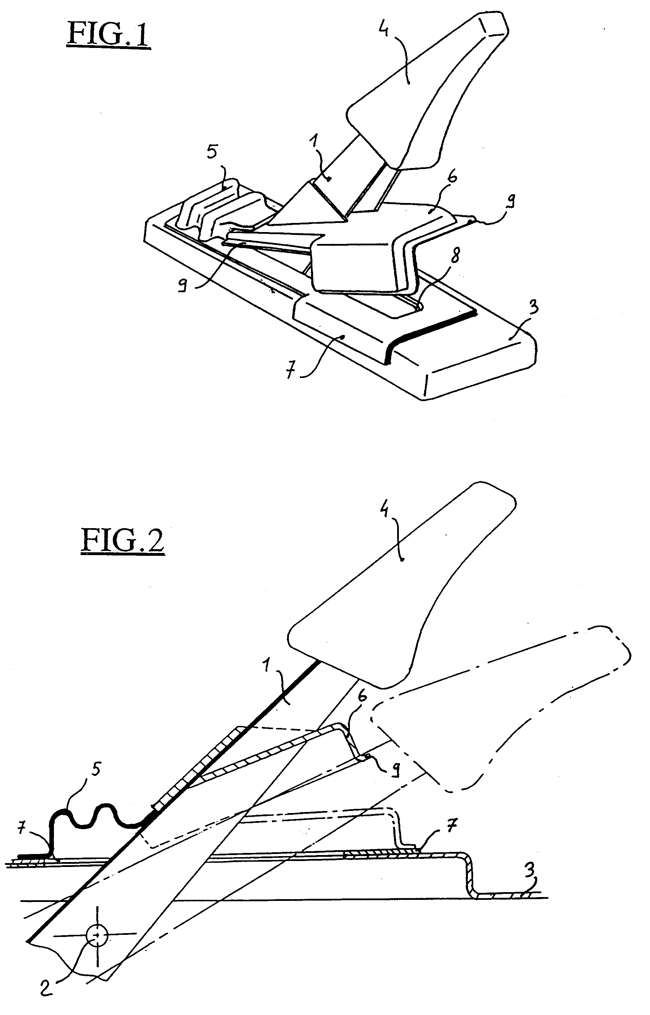

Le levier de frein à main monté dans l'habitacle (10) d'un véhicule et représenté sur les figures 1 et 2 comprend, de façon connue en soi, un levier (1) en forme de U monté à articulation autour d'un axe (2) porté par un support fixe (3). L'extrémité libre du levier porte une poignée (4). Un soufflet (5) assure l'isolation entre l'habitacle (10) et le soubassement du véhicule porteur de l'axe (2). L'étanchéité de l'articulation est effectué par l'intermédiaire d'un soufflet (5).

Selon l'invention, la base (6) du levier (1) s'étend longitudinalement et transversalement au dessus du support (3) et plus particulièrement au dessus d'une zone constitutive d'une surface d'étanchéité (7) localisée à la périphérie de la fente de montage (8) portée par le support (3), à titre d'exemple la surface (7) est de configuration rectangulaire. Selon le mode de réalisation de l'invention la base (6) du levier possède une bordure (9) destinée à entrer en contact d'appui avec la surface d'étanchéité (7) en position desserrée du frein. La bordure (9) possède avantageusement des caractéristiques de flexion. Selon une caractéristique du montage du levier conforme à l'invention, la surface d'étanchéité (7) est intégrée à un isolant phonique connu en soi qui recouvre le support (3).

## Revendications

1. Levier de frein à main (1) monté à articulation autour d'un axe (2) porté par un support fixe (3) recouvert d'un isolant phonique caractérisé par le fait que la base (6) du levier possède une bordure (9) d'appui avec une surface d'étanchéité (7) localisée à la périphérie de la fente de montage (8) portée par le support (3), dans le but d'éviter la propagation des ondes acoustiques dans l'habitacle d'un véhicule automobile en position desserrée du frein.

2. Levier de frein à main (1) selon la revendication 1, caractérisé par le fait que la surface d'étanchéité (7) possède une configuration rectangulaire et entoure la fente de montage (8) du levier de frein à main.

3. Levier de frein à main selon la revendication 1 caractérisé par le fait que la bordure d'étanchéité (9) possède des caractéristiques de flexion.

## Claims

1. Hand brake lever (1) mounted in an articulated manner about an axle (2) carried by a fixed support (3) covered by a phonic insulator, characterised by the fact that the base (6) of the lever has a supporting rim (9) with a sealing surface (7) situated on the periphery of the mounting slot (8) in the support (3) for the purpose of avoiding the generation of acoustic waves in the compartment of an automotive vehicle when the brake is released.

2. Hand brake lever (1) according to claim 1, characterised by the fact that the sealing surface (7) has a rectangular configuration and surrounds the mounting slot (8) of the hand brake lever.

3. Hand brake lever according to claim 1, characterised by the fact that the sealing rim (9) has elastic properties.

## Patentansprüche

1. Handbremshebel (1), der an einer Achse (2) schwenkbar angelenkt ist, die von einer Halterung (3) getragen wird, welche von einer Geräuschisolierung abgedeckt ist, dadurch gekennzeichnet, daß das Unterteil (6) des Hebels einen Auflagerand (9) für eine Dichtfläche (7) aufweist, die entlang des Umfangs eines in der Halterung (3) vorgesehenen Montageschlitzes (8) angeordnet ist, um dergestalt die Übertragung von akustischen Wellen in den Fahrgastraum des Kraftfahrzeuges im gelösten Zustand der Bremse zu vermeiden.

2. Handbremshebel nach Anspruch 1, dadurch gekennzeichnet, daß die Dichtfläche (7) eine rechtwinklige Ausgestaltung aufweist, und den Montageschlitz (8) des Handbremshebels umgibt.

3. Handbremshebel nach Anspruch 1, dadurch gekennzeichnet, daß der Auflagerand (9) flexible Eigenschaften aufweist.
